# EUROPÄISCHE PATENTSCHRIFT

(11) **EP 3 717 802 B1**
(45) Veröffentlichungstag und Bekanntmachung des Hinweises auf die Patenterteilung: **11.08.2021**
(21) Anmeldenummer: 18812116.4
(22) Anmeldetag: 27.11.2018
(51) Int. Cl.: F16H 61/24, F16H 63/20, F16H 63/30

(54) **GETRIEBE MIT EXTERNER SCHALTMASSE**
TRANSMISSION HAVING EXTERNAL SHIFTING MASS
TRANSMISSION AVEC MASSE DE COMMUTATION EXTÉRIEURE

(30) Priorität: 30.11.2017 DE 102017128461
(43) Veröffentlichungstag der Anmeldung: 07.10.2020
(73) Patentinhaber: Getrag Ford Transmissions GmbH, 50735 Köln (DE)
(72) Erfinder: PRICKEN, Frank, 47803 Krefeld (DE)
(74) Vertreter: Wagner Albiger & Partner Patentanwälte mbB
(86) Internationale Anmeldenummer: PCT/EP2018/082675
(87) Internationale Veröffentlichungsnummer: WO 2019/105919

(56) Entgegenhaltungen:
- EP-A2- 1 717 490
- JP-A- 2008 128 303
- KR-B1- 100 802 948

## Beschreibung

Die Erfindung betrifft ein Schaltgetriebe für ein Kraftfahrzeug, wobei das Schaltgetriebe mehrere Gänge, ein Gehäuse, einen Innenraum, der von dem Gehäuse umschlossen ist, wenigstens eine im Innenraum befindliche Gangschaltkupplung, durch die ein Gang schaltbar ist und eine Schaltvorrichtung umfasst, die dazu dient, eine äußere, außerhalb des Gehäuses angreifende Betätigungskraft zum Schalten des Ganges zu der Gangschaltkupplung zu leiten.

Ein derartiges Schaltgetriebe ist beispielsweise aus der EP 1 686 293 A1 bekannt. Die Schaltvorrichtung dieses Getriebes weist ein inneres, im Innenraum des Schaltgetriebes befindliches Schaltteil und ein erstes Einleitungselement auf, das dazu dient, die äußere Betätigungskraft zum Schalten des Ganges zu dem inneren Schaltteil zu leiten. Des Weiteren ist eine außerhalb des Gehäuses angeordnete Schaltmasse vorgesehen, die beim Schalten des Ganges bewegt wird. Aufgrund der Trägheit der Schaltmasse werden Kraftspitzen, die beim Schalten bzw. Einlegen oder Auslegen des Ganges auftreten können, geglättet. Durch das erste Einleitungselement ist auch die außen liegende Schaltmasse mit dem inneren Schaltteil verbunden. Ein derartiger Aufbau ist auch bei anderen Schaltgetrieben bekannt, wobei das Einleitungselement durch eine erste, in dem Gehäuse vorgesehene Öffnung greift.

Das erste Einleitungselement der EP 1 686 293 A1 weist dabei eine Aufnahme in Form eines Kugelkopfes auf, der mit einem Schaltgestänge oder dergleichen verbunden werden kann, um die äußere Betätigungskraft auf das erste Einleitungselement zu übertragen. Da in einem Kraftfahrzeug der Bauraum für das Schaltgetriebe grundsätzlich begrenzt ist und viele zusätzliche Anforderungen zu erfüllen sind, kann es bei einem Schaltgetriebe, bei dem die Schaltmasse mit dem Einleitungselement und somit mit der Aufnahme zur Einleitung der äußeren Betätigungskraft verknüpft ist, schwierig sein, aller Anforderungen (insbesondere Packaging) zu erfüllen.

Ein weiteres Schaltgetriebe ist aus der KR 100 802 948 B1 bekannt. Das dort beschriebene Schaltgetriebe umfasst ein erstes Einleitungselement, ein zweites Einleitungselement, eine Schaltstange und eine Schaltmasse. Zur Auswahl eines Ganges bzw. Schaltgasse wird das erste Einleitungselement gedreht, um die Schaltstange in axialer Richtung zu verstellen. Dabei werden das zweite Einleitungselement und die mit der Schaltstange verbundene Schaltmasse mitbewegt. Das zweite Einleitungselement dient zum Schalten eines Ganges, wobei dabei die Schaltstange und die Schaltmasse rotiert werden. Ein Planetenradgetriebe zwischen Schaltstange und Schaltmasse sorgt dafür, dass die Drehgeschwindigkeit der Schaltmasse von der Drehgeschwindigkeit der Schaltstange verschieden ist. Nachteilig ist der komplexe Aufbau des Schaltgetriebes.

Weiterhin ist eine Schaltvorrichtung für ein Schaltgetriebe aus der EP 1 717 490 A2 bekannt. Dabei umfasst die Schaltvorrichtung eine Schaltstange, die axial bewegt wird, um Gänge zu schalten. Weiterhin ist ein drehbares, mit der Schaltstange gekoppeltes Einleitungselement vorgesehen, wobei eine Drehung des Einleitungselements zur axialen Verschiebung der Schaltstange führt. Die Schaltstange ist zudem mit einer Schaltmasse gekoppelt, so dass die axiale Verschiebung zu einer Drehung der Schaltmasse führt. Das Einleitungselement ist nicht dazu ausgebildet, die Schaltstange um ihre Achse zu drehen. Der Aufbau der Schaltvorrichtung ist vergleichsweise aufwändig.

Der Erfindung liegt daher die Aufgabe zu Grunde, ein Schaltgetriebe bereitzustellen, das hinsichtlich seines Aufbaus und insbesondere hinsichtlich des Aufbaus seiner Schaltvorrichtung flexibel gestaltbar ist.

Die der Erfindung zu Grunde liegende Aufgabe wird mit der Merkmalskombination gemäß Anspruch 1 gelöst. Ausführungsbeispiele der Erfindung können den Unteransprüchen entnommen werden.

Erfindungsgemäß ist vorgesehen, dass die Schaltvorrichtung ein von dem ersten Einleitungselement verschiedenes Verbindungselement aufweist, mit dem die außerhalb des Gehäuses angeordnete oder äußere Schaltmasse mit dem inneren Schaltteil verbunden ist, wobei das Verbindungselement durch eine zweite Öffnung im Gehäuse greift, die von der ersten Öffnung verschieden ist. Dies ermöglicht eine räumliche Trennung von dem ersten Einleitungselement und dem Verbindungselement. Sie können daher an unterschiedlichen Stellen von außen durch das Gehäuse in den Innenraum greifen. Diese räumliche Unabhängigkeit zwischen dem ersten Einleitungselement, durch das die äußere Betätigungskraft zum Schalten des Ganges zu dem inneren Schaltteil geleitet wird, und dem Verbindungselement, mit dem die Schaltmasse mit dem inneren Schaltteil verbunden ist, führt dazu, dass das erfindungsgemäße Schaltgetriebe hinsichtlich seines Aufbaus zusätzliche Freiheitsgrade aufweist, die das Erfüllen unterschiedlicher Packaging-Anforderungen erleichtern können.

Weiterhin ist das innere Schaltteil erfindungsgemäß als Schaltstange oder zumindest als innerer Stangenabschnitt der Schaltstange ausgebildet. Soweit das innere Schaltteil aus Schaltstange ausgebildet ist, ist die Schaltstange vollständig im Innenraum des Getriebes untergebracht sein. Wenn das innere Schaltteil lediglich als innerer Stangenabschnitt der Schaltstange ausgebildet ist, liegt der innere Stangenabschnitt der Schaltstange im Gehäuse liegt und ein äußerer Stangenabschnitt der Schaltstange ragt aus dem Gehäuse heraus.

Weiterhin weist das erste Einleitungselement erfindungsgemäß ein Aufnahmeteil für die äußere Betätigungskraft zum Schalten des Ganges auf. Beispielsweise kann das Aufnahmeteil ein Kugelkopf sein, der von einem kalottenförmigen Überwurf umgriffen wird. Das Aufnahmeteil kann auch eine Öse sein, in die ein Seilzug oder ein Schaltgestänge eingehängt werden kann.

In das Aufnahmeteil des ersten Einleitungselements wird erfindungsgemäß eine Betätigungskraft zum Auswählen eines anderen Ganges eingeleitet. So kann beispielsweise eine axiale Verschiebung des ersten Einleitungselements zu einem Schalten des Ganges führen, während eine Drehung des Einleitungselements, ein anderer Gang des Schaltgetriebes ausgewählt wird. Wird ein anderer Gang ausgewählt, verändert das innere, im Innenraum befindliche Schaltteil so seine Position (hier den Drehwinkel), dass es nun nicht mehr mit der oben beschriebenen Gangschaltkupplung und insbesondere mit der Schiebemuffe dieser Gangschaltkupplung zusammenwirkt, sondern mit einer weiteren Gangschaltkupplung, die sich ebenfalls im Innenraum des Schaltgetriebes befindet.

Erfindungsgemäß führt eine axiale Verschiebung der Schaltstange oder eine Drehbewegung der Schaltstange zu einer Drehung des Verbindungselements und zu einer Drehbewegung der Schaltmasse. Die Drehung des Verbindungselements erfolgt dabei vorzugsweise um eine Drehachse, die mit einer Mittelachse der zweiten Öffnung zusammenfällt. Über den Abstand der Schaltmasse zu der Drehachse lässt sich das rotatorische Trägheitsmoment der Schaltmasse einstellen. Bedingt durch die Trägheit der Schaltmasse wird ein über das Einleitungselement eingeleiteter Schaltvorgang hinsichtlich auftretender Kraftspitzen durch das Zusammenwirken von Verbindungselement und innerem Schaltteil bzw. Schaltstange insgesamt geglättet.

Bei einer Drehbewegung der Schaltstange kann die Geschwindigkeit der Drehbewegung der Schaltmasse der Geschwindigkeit der Drehbewegung der Schaltstange entsprechen oder davon abweichen. Vorzugsweise dreht sich die Schaltmasse schneller (beispielsweise um den Faktor 1,5 und größer) als die Schaltstange, damit die Trägheit der Schaltmasse voll zur Geltung kommt.

Das Gehäuse kann in etwa eine zylindrische Grundform mit einer ersten Stirnfläche, mit einer zweiten Stirnfläche sowie mit einer die erste Stirnfläche und die zweite Stirnfläche verbindenden Mantelfläche aufweisen, wobei eine der beiden Öffnungen an der ersten Stirnwand und die andere der beiden Öffnungen an der Mantelfläche angeordnet sind. In einem Ausführungsbeispiel ist die erste Öffnung, durch die das erste Einleitungselement greift, an der ersten Stirnwand angeordnet, während die zweite Öffnung für das Verbindungselement an der Mantelfläche vorgesehen ist. Eine umgekehrte Anordnung ist ebenfalls möglich. Auch ist es möglich, dass die erste Öffnung und die zweite Öffnung an der Mantelfläche angeordnet sind, jedoch mit einem gewissen Abstand zueinander.

In einem Ausführungsbeispiel sind in dem Gehäuse mehrere, zueinander parallele Wellen drehbar gelagert, wobei sich die Schaltstange im Wesentlichen parallel zu den Wellen erstreckt. Beispielsweise kann es sich um ein sogenanntes Inline-Schaltgetriebe handeln, bei dem einer Eingangswelle und eine Ausgangswelle koaxial zueinander angeordnet sind. Eine Vorgelegewelle ist dabei von den koaxialen Wellen axial beabstandet. Die erste Öffnung für das erste Einleitungselement kann an der Stirnfläche des Gehäuses vorgesehen sein, an dem ein mit der Ausgangswelle verbundener Abtrieb vorgesehen ist.

Die Schaltvorrichtung kann derart ausgebildet sein, dass eine axiale Verschiebung der Schaltstange zu einer axialen, gleichgerichteten oder entgegen gerichteten Bewegung einer Schiebemuffe der Gangschaltkupplung, die auf einer der Wellen im Getriebe sitzt, führt. Somit lässt sich durch die axiale Verschiebung der Schaltstange ein Gang ein- bzw. auslegen. Es ist auch möglich, dass alternativ eine Drehung der Schaltstange eine axiale Bewegung der Schiebemuffe bewirkt, sodass sich durch die Drehung der Schaltstange der Gang ein- bzw. auslegen lässt.

Das erste Einleitungselement und der innere Stangenabschnitt der Schaltstange können einstückig bzw. als eine feste mechanische Einheit ausgebildet sein. Das Einleitungselement kann dabei auch als ein äußerer Stangenabschnitt der Schaltstange bezeichnet sein. Die Schaltstange greift dabei durch die erste Öffnung im Gehäuse und erstreckt sich von außen durch das Gehäuse in den Innenraum des Getriebes.

Anhand eines in der Zeichnung dargestellten Ausführungsbeispiels wird die Erfindung näher erläutert. Es zeigen:
- Figur 1: ein erfindungsgemäßes Schaltgetriebe; und
- Figur 2: einen Teil der Schaltvorrichtung des Schaltgetriebes der Figur 1.

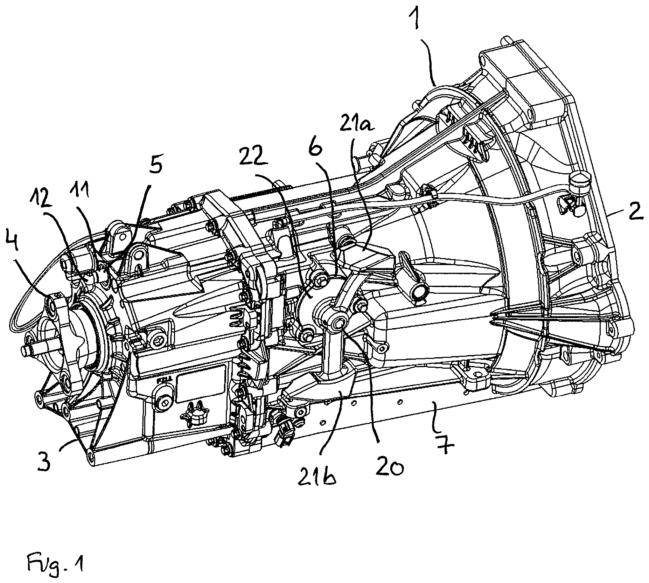

Figur 1 zeigt in perspektivische Ansicht ein Mehrgang-Schaltgetriebe mit einem Gehäuse 1. Das Gehäuse 1 weist ein motorseitiges Ende 2 und ein abtriebsseitiges Ende 3 auf. Das Gehäuse 1 umschließt einen Innenraum des Getriebes, in dem eine Eingangswelle, eine Ausgangswelle und im hier vorliegenden Ausführungsbeispiel eine Vorgelegewelle (jeweils verdeckt) angeordnet sind. Die Wellen sind jeweils parallel zueinander, wobei Eingangswelle und Ausgangswelle koaxial angeordnet sind. Die Wellen erstrecken sich von dem motorseitigen Ende 2 in Richtung des abtriebsseitigen Endes 3.

Die Eingangswelle lässt sich über eine Kupplung mit einem Motor (nicht dargestellt) verbinden, während die Ausgangswelle mit einem Abtrieb 4 verbunden ist. In dem Innenraum sind mehrere Gangschaltkupplungen angeordnet, die dazu dienen, Gänge des Schaltgetriebes ein- bzw. auszulegen (zu schalten). Jede der Gangschaltkupplung weist üblicherweise eine Schiebemuffe auf, durch deren axiale Verschiebung ein Gang geschaltet wird.

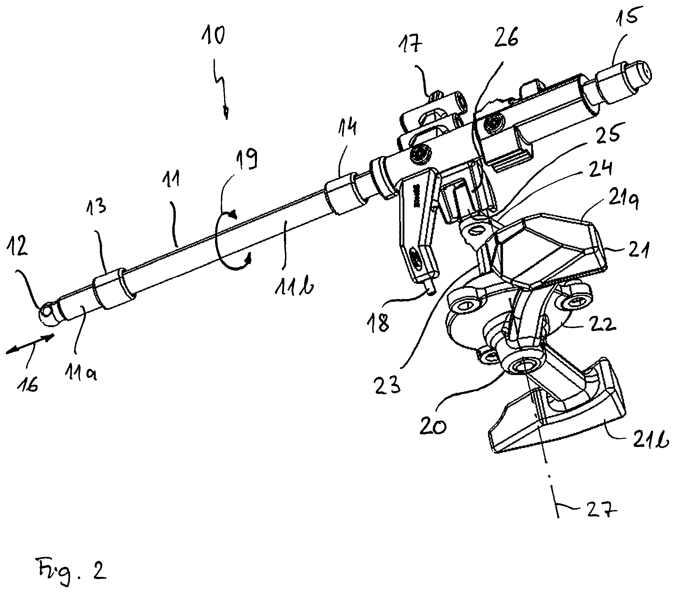

Zum Schalten eines Ganges ist eine äußere, außerhalb des Gehäuses 1 angreifende Betätigungskraft notwendig, wobei diese äußere Betätigungskraft durch eine Schaltvorrichtung zu den im Innenraum befindlichen Gangschaltkupplungen bzw. zu deren Schiebemuffen geleitet wird. Figur 2 zeigt Teile dieser Schaltvorrichtung, die in ihrer Gesamtheit mit 10 bezeichnet wird.

An dem abtriebsseitigen Ende 3 weist das Gehäuse 1 eine erste Öffnung 5 auf, durch die eine Schaltstange 11 der Schaltvorrichtung 10 greift. An einem äußeren Ende weist die Schaltstange 11 einen Kugelkopf 12 auf, durch den die äußere Betätigungskraft zum Schalten des Ganges in die Schaltstange 11 geleitet werden kann. Wie insbesondere der Figur 2 nehmen ist, weist die Schaltstange 11 einen außen liegenden Stangenabschnitt 11a und einen im Innenraum liegenden inneren Stangenabschnitt 11b auf. In Figur 1 ist nur der äußere Stangenabschnitt 11a mit dem Kugelkopf 12 zu erkennen. Lager der Schaltstange 11 sind mit 13, 14, 15 bezeichnet, wobei das Lager 13 mit der ersten Öffnung 5 zusammenfällt. Der außenliegende Stangenabschnitt 11a kann auch als erstes Einleitungselement bezeichnet werden, das durch die erste Öffnung 5 greift und die äußere Betätigungskraft zum Schalten des Ganges zu dem inneren Stangenabschnitt 11b leitet. Einleitungselement und Schaltstange sind folglich einstückig ausgebildet.

Durch eine axiale Bewegung (siehe Doppelpfeil 16) lässt sich über einen Schaltfinger 10, der in eine Ausnehmung einer Schaltgabel greift (nicht dargestellt), die axiale Lage einer Schiebemuffe eines ausgewählten Ganges verändern, wobei dann dieser ausgewählte Gang geschaltet wird. Des Weiteren ist an der Schaltstange 11 ein Führungsstift 18 angeformt, der in eine Führungskulisse (nicht dargestellt) greift.

Die Schaltstange 11 lässt sich auch um ihre Längsachse verdrehen, was durch den Doppelpfeil 19 angedeutet ist. Durch Drehung der Schaltstange 11 ändert sich die Lage bzw. Höhe des Schaltfingers 17, wodurch der Schaltfinger 17 mit unterschiedlichen Schaltgabeln in Eingriff gebracht werden kann. Durch die Drehung der Schaltstange 11 lässt sich somit eine andere Schaltgabel, eine andere Schiebemuffe und somit ein anderer Gang auswählen. Ist dieser andere Gang durch Drehung der Schaltstange 11 ausgewählt, kann der Gang durch axiale Verschiebung 16 der Schaltstange 11 geschaltet werden. Da durch die Schaltstange 11 auch Gänge ausgewählt werden können, kann sie hier auch als Schalt-Wählstange bezeichnet werden. Durch das Zusammenwirken von Führungsstift 18 und feststehender Führungskulisse werden nur bestimmte Positionen der Schaltstange hinsichtlich axialer Lage und Drehwinkel zugelassen.

Die Schaltvorrichtung 10 weist des Weiteren ein Verbindungselement 20 auf, das eine äußere Schaltmasse 21, hier bestehend aus einer Teilmasse 21a und einer Teilmasse 21b, mit der Schaltgabel 11 verbindet. Das Verbindungselement 20 weist dabei einen Flansch 22 auf, durch den sich das Verbindungselement 20 an dem Gehäuse 1 befestigen lässt.

In Figur 1 ist ein äußerer Teil des Verbindungselements 20 mit den Teilmassen 21a und 21b sowie dem Flansch 22 zu erkennen. Der Flansch 22 deckt dabei eine zweite Öffnung 6 ab, durch die eine Drehstange 23 des Verbindungselements 20 greift. An einem im Innenraum liegenden Ende ist die Drehstange 23 drehfest mit einer Kurbelwange 24 verbunden, die einen Zapfen 25 trägt. Der Zapfen 25 greift in ein U-förmiges Maul 26, das an der Schaltstange 11 befestigt ist. Eine axiale Verschiebung 16 der Schaltstange 11 führt durch das Zusammenwirken von Zapfen 25 und U-förmigem Maul 26 zu einer Drehung des Verbindungselements 20 um eine mit 27 bezeichnete Drehachse. Aufgrund ihres radialen Abstands verursachen die Teilmassen 21a, 21b ein rotatorisches Trägheitsmoment, wodurch die Schaltbewegung (axiale Verschiebung 16) der Schaltstange 11 mit einer gewissen Massenträgheit verbunden ist, durch die beim Schalten auftretende Kraftspitzen besser überwunden werden können.

Die äußere Betätigungskraft zum Schalten eines Gangs und die äußere Betätigungskraft zum Wählen der Gänge werden über den Kugelkopf (12) durch die erste Öffnung 5 des Gehäuses 1 in den Innenraum des Getriebes geleitet. Die Bereitstellung einer Schaltmasse 21 und deren Verbindung mit der Schaltstange 11 erfolgt dabei durch die zweite Öffnung, die von der ersten Öffnung 5 verschieden ist und auch an einer anderen Außenfläche des Gehäuses 1 angeordnet ist. Während sich die erste Öffnung 5 am abtriebseitigen Ende 3 befindet, ist die zweite Öffnung 6 zwischen dem Ende 3 und dem motorseitigen Ende 2 an einer Seitenfläche 7 des Getriebes 1 angeordnet.

### Bezugszeichenliste

- 1: Gehäuse
- 2: Motorseitiges Ende
- 3: Abtriebsseitiges Ende
- 4: Abtrieb
- 5: Erste Öffnung
- 6: Zweite Öffnung
- 7: Seitenfläche

- 10: Schaltvorrichtung
- 11: Schaltstange
- 11a: Äußerer Stangenabschnitt / Erstes Einleitungselement
- 11b: Innerer Stangenabschnitt
- 12: Kugelkopf (Aufnahmeteil)
- 13: Lager
- 14: Lager
- 15: Lager
- 16: Doppelpfeil (axiale Verschiebung)
- 17: Schaltfinger
- 18: Führungsstift
- 19: Doppelpfeil (Drehrichtung)
- 20: Verbindungselement
- 21: Schaltmasse
- 21a: Teilmasse
- 21b: Teilmasse
- 22: Flansch
- 23: Drehstange
- 24: Kurbelwange
- 25: Zapfen
- 26: U-förmiges Maul

## Patentansprüche

1. Schaltgetriebe für ein Kraftfahrzeug, umfassend mehrere Gänge, ein Gehäuse (1), einen Innenraum, der von dem Gehäuse (1) umschlossen ist, wenigstens eine im Innenraum befindliche Gangschaltkupplung, durch die ein Gang schaltbar ist, und eine Schaltvorrichtung (10), die dazu dient, eine äußere, außerhalb des Gehäuses (1) angreifende Betätigungskraft zum Schalten zu der Gangschaltkupplung zu leiten, wobei die Schaltvorrichtung (10) aufweist:
- wenigstens ein inneres, im Innenraum befindliches Schaltteil,
- ein erstes Einleitungselement (11a), das durch eine erste, in dem Gehäuse vorgesehene Öffnung (5) greift und dazu dient, die äußere Betätigungskraft zum Schalten des Ganges zu dem inneren Schaltteil zu leiten,
- eine außerhalb des Gehäuses angeordnete Schaltmasse (21), die beim Schalten des Gangs bewegt wird,
wobei ein von dem ersten Einleitungselement (11a) verschiedenes Verbindungselement vorgesehen ist, mit dem die Schaltmasse (21) mit dem inneren Schaltteil verbunden ist (20), wobei das Verbindungselement (20) durch eine zweite, von der ersten Öffnung verschiedene Öffnung (6) im Gehäuse (1) in den Innenraum greift, wobei das innere Schaltteil als Schaltstange (11) oder zumindest als innerer Stangenabschnitt (11b) der Schaltstange (11) ausgebildet ist und wobei das erste Einleitungselement (11a) ein Aufnahmeteil (12) für die äußere Betätigungskraft zum Schalten des Ganges aufweist, **dadurch gekennzeichnet, dass** eine axiale Verschiebung der Schaltstange (11) oder eine Drehbewegung der Schaltstange (11) zu einer Drehung des Verbindungselements (20) und zu einer Drehbewegung der Schaltmasse (21) führt, wobei in das Aufnahmeteil (12) auch eine äußere Betätigungskraft zum Auswählen eines anderen Ganges einleitbar ist.

2. Getriebe nach Anspruch 1, **dadurch gekennzeichnet, dass** das Gehäuse (1) in etwa eine zylindrische Grundform mit ersten Stirnfläche, mit einer zweiten Stirnfläche und mit einer Mantelfläche aufweist, wobei eine der beiden Öffnungen (5,6) an der ersten Stirnwand und die andere der beiden Öffnungen (5,6) an der Mantelfläche angeordnet sind oder wobei die beiden Öffnungen (5,6) voneinander beabstandet an der Mantelfläche angeordnet sind.

3. Getriebe nach einem der Ansprüche 1 bis 2, **dadurch gekennzeichnet, dass** in dem Gehäuse (1) mehrere, zueinander parallele Wellen drehbar gelagert sind, wobei sich die Schaltstange im Wesentlichen parallel zu den Wellen erstreckt.

4. Getriebe nach einem der Ansprüche 1 bis 3, **dadurch gekennzeichnet, dass** das erste Einleitungselement (11a) und der innere Stangenabschnitt (11b) einstückig ausgebildet ist.

## Claims

1. Manual transmission for a motor vehicle, comprising a plurality of gears, a housing (1), an interior space which is enclosed by the housing (1), at least one gearshift clutch located in the interior space by means of which a gear can be shifted, and a shifting device (10), which serves to guide an external actuating force for shifting, which force engages externally to the housing (1), to the gearshift clutch, wherein the shifting device (10) has:
- at least one internal shifting part located in the interior space,
- a first introducing element (11a) which engages through a first opening (5) provided in the housing and serves to guide the external actuating force for shifting the gear to the internal shifting part,
- a shifting mass (21) arranged externally to the housing, which is moved when shifting the gear,
wherein a connecting element is provided which is different from the first introducing element (11a), with which the shifting mass (21) is connected (20) with the internal shifting part, wherein the connecting element (20) engages through a second opening (6) in the housing (1) which is different from the first opening, wherein the internal shifting part is in the form of a shifting rod (11) or at least of an internal rod portion (11b) of the shifting rod (11) and wherein the first introducing element (11a) has a receiving part (12) for the external actuating force for shifting the gear, **characterised in that** an axial displacement of the shifting rod (11) or a rotational movement of the shifting rod (11) results in a rotation of the connecting element (20) and in a rotational movement of the shifting mass (21), wherein also an external actuating force for selecting another gear can be introduced into the receiving part (12).

2. Transmission according to claim 1, **characterised in that** the housing (1) has an approximately cylindrical basic shape having first end face, having a second end face and having a jacket surface, wherein one of the two openings (5, 6) is arranged on the first end face and the other of the two openings (5, 6) is arranged on the jacket surface or wherein the two openings (5, 6) are arranged spaced from one another on the jacket surface.

3. Transmission according to any of claims 1 to 2, **characterised in that** shafts which are parallel to one another are mounted in a rotatable manner in the housing (1), wherein the shifting rod extends substantially parallel to the shafts.

4. Transmission according to any of claims 1 to 3, **characterised in that** the first introducing element (11a) and the internal rod portion (11b) are designed integrally.

## Revendications

1. Boîte de vitesses destinée à un véhicule automobile, comprenant plusieurs vitesses, un châssis (1), un habitacle, qui est entouré par le châssis (1), au moins un embrayage de changement de vitesses situé dans l'habitacle, grâce auquel une vitesse peut être commutée, et un dispositif de commutation (10), qui sert à guider une force d'actionnement extérieure agissant à l'extérieur du châssis (1) pour la commutation vers l'embrayage de changement de vitesses, dans laquelle le dispositif de commutation (10) présente :
- au moins un organe de commutation intérieur situé dans l'habitacle,
- un premier élément d'introduction (11a), qui s'engage à travers une première ouverture (5) prévue dans le châssis et qui sert à guider la force d'actionnement extérieure pour la commutation de la vitesse vers l'organe de commutation intérieur,
- une masse de commutation (21) disposée à l'extérieur du châssis, qui est mise en mouvement lors de la commutation de la vitesse,
dans laquelle est prévu un élément de liaison différent du premier élément d'introduction (11a), avec lequel la masse de commutation (21) est reliée à l'organe de commutation intérieur (20), dans laquelle l'élément de liaison (20) s'engage dans l'habitacle à travers une deuxième ouverture (6) différente de la première ouverture, dans laquelle l'organe de commutation intérieur est formé comme tige de commutation (11) ou au moins comme section de tige intérieure (11b) de la tige de commutation (11) et dans laquelle le premier élément d'introduction (11a) présente une partie de réception (12) destinée à la force d'actionnement extérieure pour la commutation de la vitesse, **caractérisée en ce qu'**un déplacement axial de la tige de commutation (11) ou un mouvement de rotation de la tige de commutation (11) entraîne une rotation de l'élément de liaison (20) et un mouvement de rotation de la masse de commutation (21), dans laquelle une force d'actionnement extérieure peut également être introduite dans la partie de réception (12) pour choisir une autre vitesse.

2. Transmission selon la revendication 1, **caractérisée en ce que** le châssis (1) présente selon approximativement une forme de base cylindrique une première surface frontale, une seconde surface frontale et une surface extérieure, dans laquelle l'une des deux ouvertures (5, 6) est disposée au niveau de la première paroi frontale et l'autre des deux ouvertures (5, 6) est disposée au niveau de la surface extérieure ou dans laquelle les deux ouvertures (5, 6) sont disposées à distance l'une de l'autre au niveau de la surface extérieure.

3. Transmission selon l'une quelconque des revendications 1 à 2, **caractérisée en ce que** dans le châssis (1) plusieurs arbres parallèles les uns aux autres sont montés de manière à pouvoir pivoter, dans laquelle la tige de commutation s'étend sensiblement parallèlement aux arbres.

4. Transmission selon l'une quelconque des revendications 1 à 3, **caractérisée en ce que** le premier élément d'introduction (11a) et la section de tige intérieure (11b) sont formés d'un seul tenant.
